# EUROPÄISCHE PATENTSCHRIFT

(11) **EP 2 981 715 B1**
(45) Veröffentlichungstag und Bekanntmachung des Hinweises auf die Patenterteilung: **10.04.2019**
(21) Anmeldenummer: 14706476.0
(22) Anmeldetag: 13.02.2014
(51) Int. Cl.: F03D 80/40, F03D 1/06

(54) **ROTORBLATT EINER WINDENERGIEANLAGE**
ROTOR BLADE OF A WIND TURBINE
PALE DE ROTOR D'UNE ÉOLIENNE

(30) Priorität: 06.03.2013 DE 102013003750
(43) Veröffentlichungstag der Anmeldung: 10.02.2016
(73) Patentinhaber: Eichenauer Heizelemente GmbH & Co. KG, 76870 Kandel (DE)
(72) Erfinder: BARTH, Manfred, 69469 Weinheim (DE)
(74) Vertreter: Busch, Tobias
(86) Internationale Anmeldenummer: PCT/EP2014/000399
(87) Internationale Veröffentlichungsnummer: WO 2014/135248

(56) Entgegenhaltungen:
- EP-A2- 1 788 239
- DE-A1- 2 825 980
- DE-A1- 19 528 862
- DE-A1-102010 051 295
- DE-A1-102010 051 296
- US-A1- 2006 018 752

## Beschreibung

Die Erfindung betrifft ein Rotorblatt für eine Windenergieanlage mit mindestens einem Gebläse zur Erzeugung einer Luftströmung im Rotorblatt und mindestens einer Heizvorrichtung zur Erwärmung zumindest eines Teils der Luftströmung.

Die Rotorblätter einer Windenergie- bzw. Windkraftanlage sind wesentlich für deren Wirkungsgrad verantwortlich und sind somit Schlüsselkomponenten. Zur effizienten Stromerzeugung werden solche Windenergieanlagen an Standorten mit einer hohen Anzahl an Windtagen und großen Windgeschwindigkeiten errichtet. Solche Standorte finden sich auch insbesondere in kalten Regionen.

Dabei kommt es bei entsprechenden Witterungsbedingungen zur Eisbildung an den Rotorblättern. Tritt Eisbildung auf, so wird der Wirkungsgrad der Windenergieanlage vermindert, da sich durch die Eisbildung das aerodynamische Profil der Rotorblätter verändert. Auch eine Unwucht des Rotors kann in Folge einer Eisbildung auftreten. Diese Verminderung des Wirkungsgrades erfolgt dabei in einer Zeit mit überdurchschnittlichen Windgeschwindigkeiten, nämlich der Herbst- und Winterzeit.

Zudem stellen herabfallende Eisbrocken eine Gefahr dar. Windenergieanlagen müssen daher, bei einer Vereisung der Rotorblätter, aus Sicherheitsgründen in den Stillstand versetzt werden, um die Umgebung vor wegschleudernden Eisstücken, sogenanntem Eisabwurf, zu schützen. Dieser Stillstand kann mehrere Tage bis Wochen andauern und bedeutet einen erheblichen Produktionsausfall.

In der DE 196 21 485 A1 wird eine Rotorblattheizung für Windkraftanlagen beschrieben. Dabei sind an einem Rotorblattflansch Lufteintrittsstutzen vorgesehen. Mit einem Heizer und Lüfter wird warme Luft erzeugt, die in den Lufteintrittsstutzen eingeblasen wird. Der Heizlüfter befindet sich außerhalb des Rotorblatts.

In der EP 0 842 360 B1 wird ein Verfahren zum Enteisen eines Rotorblatts einer Windenergieanlage beschrieben, das miteinander kommunizierende Hohlräume aufweist. Dabei wird ein erwärmtes Wärmeträgermedium durch die Hohlräume geleitet. Die Mittel zur Einleitung eines Wärmeträgermediums umfassen ein elektrisches Gebläse mit einem integrierten Heizelement. Die Saugseite des Gebläses ist an den zuletzt durchströmten Hohlraum angeschlossen; die Druckseite des Gebläses ist an den ersten Hohlraum angeschlossen, so dass ein Kreislauf entsteht.

Die DE 10 2005 034 131 A1 beschreibt ein Verfahren und eine Vorrichtung zum Enteisen von Rotorblättern von Windkraftanlagen. Dabei wird erhitzte Luft durch einen Kanal von der Blattwurzel in Richtung zu der Blattspitze geleitet. Das Rotorblatt-Enteisungssystem umfasst ein Heizelement, das in der Nabe angeordnet ist. Das Heizelement ist mit einem Gebläse oder Ventilator gekoppelt, um die von den Heizelementen erhitzte Luft in Umlauf zu bringen.

Die DE 195 28 862 A1 beschreibt ein Verfahren zum Enteisen eines Rotorblattes einer Windenergieanlage, das miteinander kommunizierende Hohlräume aufweist. Ein Wärmeträgermedium wird durch die Hohlräume geleitet. Das erwärmte Wärmeträgermedium wird nach Durchströmen eines blattnasenseitigen Hohlraumes an Bereiche der Blattwand in einen dazu benachbarten Hohlraum gelenkt.

In der DE 10 2010 051 296 A1 wird ein Rotorblatt für eine Windenergieanlage beschrieben, mit zwei sich in Längsrichtung des Rotorblatts erstreckenden Trennwänden. Die Trennwände bilden einen an den Enden des Rotorblatts einen offenen Mittelkanal und einen an seinen Enden offenen Nasenkantenkanal. Der Mittelkanal und der Nasenkantenkanal stehen miteinander in Verbindung. Eine Gebläseeinrichtung erzeugt einen Luftstrom durch den Mittelkanal. Der Luftstrom zirkuliert in dem Rotorblatt über den Mittelkanal und den Nasenkantenkanal. Die Richtung des Luftstroms ist mittels der Gebläseeinrichtung umschaltbar.

Die DE 10 2010 051 295 A1 beschreibt ein Rotorblatt für eine Windenergieanlage, mit zwei sich in Längsrichtung erstreckenden Trennwänden. Die Trennwände bilden einen an seinen Enden offenen Mittelkanal und einen an seinen Enden offenen Nasenkantenkanal. Der Mittelkanal und der Nasenkantenkanal stehen an ihren Enden miteinander in Verbindung. Das Rotorblatt weist eine Gebläseeinrichtung auf, die einen Luftstrom durch den Mittelkanal erzeugt. Eine Heizeinrichtung ist getrennt von der Gebläseeinrichtung in einem blattspitzenseitigen Abschnitt des Mittelkanals angeordnet. Dessen Querschnitt ist verjüngt gegenüber dem Querschnitt des Mittelkanals in der Blattwurzel.

Darüber hinaus ist aus der DE 28 25 980 A1 ein elektrischer Rohrheizkörper mit einem aus Bandmaterial gebogenen Mantelrohr bekannt. Im Mantelrohr verläuft ein elektrisches Widerstandsheizelement, das von einer elektrisch isolierenden Einbettmasse umgeben ist. Die Längsseitenbereiche des Bandmaterials sind unter Bildung eines geschlossenen Querschnitts übereinander gebogen. Aufgabe der Erfindung ist es, ein möglichst kostengünstiges Rotorblatt für eine Windenergieanlage zur Verfügung zu stellen, bei dem eine Eisbildung verhindert und/oder beseitigt wird. Dies soll auf möglichst energieeffiziente Weise geschehen. Dabei soll eine hohe Flexibilität ermöglicht werden. Die Maßnahmen sollen vorzugsweise witterungsspezifisch anpassbar sein, sodass sowohl bei Temperaturen um den Gefrierpunkt als auch bei sehr tiefen Temperaturen gezielt reagiert werden kann. Weiterhin sollen die Rotorblätter wenig störungsanfällig und leicht zu warten sein.

Diese Aufgabe wird in einem Rotorblatt nach Anspruch 1 erfindungsgemäß dadurch gelöst, dass die Heizvorrichtung mindestens ein Heizmodul aufweist. Dieser modulare Aufbau ermöglicht eine hohe Flexibilität. So kann die Heizvorrichtung durch Einsatz mehrerer Heizmodule für besonders kalte Regionen problemlos erweitert werden. In Regionen, in denen nur selten tiefe Temperaturen auftreten, kann ein Rotorblatt mit einer Heizvorrichtung mit nur einem Heizmodul eingesetzt werden.

Werden mehrere Heizmodule in der Heizvorrichtung eingesetzt, so sind diese vorzugsweise baugleich. Die Heizvorrichtung ist dadurch je nach Einsatzgebiet des Rotorblatts und ihrer dazu benötigten Heizleistung auf einfache und kostengünstige Weise erweiterbar.

Bei einer besonders günstigen Ausführung der Erfindung weist das Rotorblatt eine Heizvorrichtung mit mindestens zwei Heizmodulen auf. Die Heizmodule sind vorzugsweise mit einer Schalteinrichtung verbunden, mit der die Module einzeln und/oder gruppenweise zu- und/oder abschaltbar sind. Die Heizmodule können beispielsweise auch in Reihen und/oder Parallelschaltung verbunden sein.

Bei einer besonders vorteilhaften Ausführung der Erfindung weist mindestens ein Modul wenigstens zwei Heizstufen auf, so dass das Modul je nach Stufe unterschiedlichen Heizleistungen abgeben kann.

Dadurch kann flexibel und energieeffizient auf unterschiedliche Witterungsbedingungen reagiert werden. Je nach Bedarfsfall ist eine unterschiedliche Anzahl an Heizmodulen zu- bzw. abschaltbar. Liegen besonders kalte Witterungsbedingungen vor, so wird eine große Anzahl an Heizmodulen zugeschaltet. Bessern sich die Witterungsbedingungen, so wird nur eine kleine Anzahl an Heizmodulen zugeschaltet.

Durch dieses gruppenweise Zu- bzw. Abschalten der Heizmodule wird ein Rotorblatt geschaffen, bei dem während des Jahreszykluses auf äußerst . Energie sparende Weise eine Eisbildung vermieden wird. Im Herbst und Frühjahr kann durch Zuschaltung nur weniger Module mit einer geringen Heizleistung eine Eisbildung vermieden bzw. Eis entfernt werden. Im Winter können zusätzliche Heizmodule zugeschaltet werden, so dass auch bei tiefen Temperaturen eine Eisfreiheit der Rotorblätter gewährleistet bleibt.

Vorzugsweise sind alle Heizmodule einer Heizvorrichtung in einem gemeinsamen Gehäuse angeordnet. Auf diese Weise entsteht eine kompakte Baueinheit, die leicht zu montieren ist bzw. bei Wartungsarbeiten problemlos entfernt werden kann. Die einzelnen Heizmodule können innerhalb der kompakten Baueinheit entweder nebeneinander und/oder übereinander und/oder hintereinander angeordnet sein.

Jedes Heizmodul umfasst mindestens ein Heizelement. Somit besteht im einfachsten Fall das Heizmodul aus dem Heizelement selbst. Bei einer besonders günstigen Variante der Erfindung umfasst jedes Heizmodul mehrere Heizelemente.

Bei einer besonders vorteilhaften Variante der Erfindung werden in dem Rotorblatt Heizelemente eingesetzt, die mindestens einen Widerstandsheizleiter aufweisen, der von einem Mantel umgeben ist. Rotorblätter mit solchen Heizelementen haben erhebliche Vorteile. Dies liegt unter anderem daran, dass Rotorblätter üblicherweise aus glasfaserverstärktem Kunststoff (GfK) in einer Halbschalen-Sandwich-Bauweise hergestellt werden. Auch finden Materialien wie beispielsweise PU-Schaum bzw. Balsaholz häufig Verwendung. Bei einigen Rotorblättern kommt kohlenstoffverstärkter Kunststoff (CFK) zum Einsatz. Diese Materialien sind äußerst empfindlich gegenüber Temperaturspitzen. Gleichzeitig muss der durch den Rotorflügel geleitete Luftstrom ausreichend erwärmt werden, um eine Eisbildung zu verhindern. Bei herkömmlichen Rotorblättern kommt es bisher im Bereich der elektrischen Widerstandsheizleiter zu hohen Temperaturspitzen, die eine Gefahr für die angrenzenden Materialien darstellen.

Durch die Ummantelung wird diese Gefahr erheblich gemindert und eine gleichmäße Wärmeabgabe an die umströmende Luft gewährleistet.

Vorzugsweise handelt es sich bei den Mänteln um hohlzylindrische Körper, in denen ein Widerstandsheizleiter, insbesondere achsmittig, angeordnet ist, sogenannte Mantelrohre. Als besonders günstig erweist sich dabei, wenn die Mäntel aus einem Metall, vorzugsweise einem rostfreien Stahl, Aluminium, Kupfer oder einer Legierung, bestehen.

Die Mantelrohre fangen Temperaturspitzen ab und sorgen für eine gleichmäßige Temperaturverteilung. Die Wärme verteilt sich innerhalb des Mantels und wird dann von dem Mantelrohr an die es umströmende Luft kontrolliert abgegeben, sodass eine Schädigung des Rotorblatts durch Temperaturspitzen vermieden wird. Die erfindungsgemäße Konstruktion ermöglicht dabei gleichzeitig einen hohen Warmluftdurchsatz der eine Eisbildung sicher verhindert.

Bei einer besonders vorteilhaften Ausführung der Erfindung ist der freie Raum im Innern des Mantelrohrs zumindest teilweise mit einer Einbettmasse ausgefüllt. Das Widerstandsheizelement ist in dieser Einbettmasse fixiert.

Solche Rohrheizkörper erweisen sich als besonders störungsarm und gewährleisten eine hohe Betriebssicherheit. Die Einbettmasse verhindert, dass der elektrische Widerstandsheizkörper in Kontakt mit dem metallischen Mantel kommt und so ein Kurzschluss auftreten kann, der zu einem kompletten Stillstand der Windenergieanlage führen könnte und somit zu hohen Betriebsausfällen.

Als besonders günstig hat sich eine Einbettmasse aus Magnesiumoxid (MgO) erwiesen. Dieses Material zeichnet sich durch eine hohe Wärmeleitfähigkeit und sehr gute elektrische Isoliereigenschaften aus. Dabei wird in dem Rotorblatt durch die elektrischen Widerstandsheizleiter Wärme erzeugt, die von der Einbettmasse gleichmäßig zum metallischen Mantelrohr geleitet werden und dann von dem Mantel an die umströmende Luft im Rotorblatt gleichmäßig abgegeben wird. Die erfindungsgemäßen Rotorblätter können hierdurch mit großer Heizleistung versorgt und somit sicher gegenüber einer Eisbildung geschützt werden, ohne dass wichtige Konstruktionsbauteile gefährdet werden. Betriebsausfälle durch Kurzschlüsse sind dadurch nahezu ausgeschlossen.

Vorzugsweise ist im Rotorblatt ein eigenes Luftleitsystem angeordnet zur Führung der Luftströmung. Rotorblätter werden üblicherweise in Sandwichbauweise hergestellt, wobei innerhalb des Rotorblatts Stege verlaufen, die das Rotorblatt im Innern räumlich unterteilen. Bei herkömmlichen Rotorblättern wird die erwärmte Luft durch diese Hohlräume im Innern des Rotorblatts geleitet. Dagegen weist die erfindungsgemäße Konstruktion bei einer vorteilhaften Variante ein separates Luftleitsystem auf, das in den Hohlräumen angeordnet ist. Dieses Luftleitsystem besteht vorzugsweise aus Kanälen. Alternativ oder ergänzend kann die Luftführung auch in Rohren erfolgen.

Bei einer Variante der Erfindung bestehen die Kanäle und/oder Rohre aus einem Kunststoff bzw. einem Verbundmaterial. Auch können Kanäle und/oder Rohre aus einem dünnen und leichten Blech eingesetzt werden.

Vorzugsweise sind die Kanäle und/oder Rohre zumindest bereichsweise isoliert. Auf diese Weise kann die erwärmte Luft zunächst ohne Wärmeverluste an die Stellen des Rotorblatts geleitet werden, die besonders anfällig für eine Eisbildung sind, ohne dass auf dem Weg dorthin Wärme verloren geht. Dies ist energieeffizient und senkt die Betriebskosten.

Als besonders günstig erweist es sich, wenn das Gebläse beabstandet von der Heizvorrichtung angeordnet ist. Bei einer bevorzugten Variante ist dabei mindestens ein Gebläse im Bereich der Blattwurzel und/oder der Nabe des Rotors angeordnet. Mindestens eine Heizvorrichtung befindet sich davon räumlich beabstandet, vorzugsweise zwischen der Blattwurzel und der Blattspitze.

Bei einer besonders günstigen Variante wird das Luftleitsystem vom Gebläse bis zur Heizvorrichtung und/oder von der Heizvorrichtung bis zur Blattspitze des Rotorblatts von einem geschlossenen Kanal und/oder Rohr gebildet.

Vorteilhaft kann dabei auf eine Isolierung zwischen Gebläse und Heizvorrichtung verzichtet werden.

Der Abschnitt des Luftleitsystems nach der Heizvorrichtung ist vorzugsweise isoliert, sodass, insbesondere bei der Luftströmung bis zur Blattspitze, nur geringe Wärmeverluste auftreten. Auf diese Weise hat die Luft trotz des langen Strömungsweges bis zur Blattspitze noch eine verhältnismäßig hohe Temperatur.

Das Luftleitsystem weist vorzugsweise im Bereich der Blattspitze mindestens eine Öffnung auf.

Bei einer Variante der Erfindung wird auch die Rückströmung von der Blattspitze zumindest bereichsweise in einem Kanal und/oder Rohr geführt. Dabei erweist es sich als günstig, wenn das Luftleitsystem auch in diesem Bereich zumindest abschnittsweise Öffnungen aufweist.

Die Blattnase des Rotorblatts ist ein weiterer Bereich, der anfällig für Eisbildung ist. Warmluft strömt aus den Öffnungen in die Hohlräume des Rotorblattes, die an die Außenwand der Blattnase grenzen. Ergänzend oder alternativ kann die Luftrückführung auch bereichsweise oder komplett innerhalb der Hohlräume, die durch Stege begrenzt werden, geführt werden.

Vorzugsweise ist die Heizvorrichtung in einem Gehäuse angeordnet, das einen Kaltluftanschluss und/oder einen Warmluftanschluss aufweist. Auf diese Weise wird eine kompakte Baueinheit gebildet, die in das Luftleitsystem des Rotorblatts mit geringem Montageaufwand integrierbar und bei Reparaturarbeiten schnell aus- bzw. wieder eingebaut werden kann. Dabei sind die Anschlüsse auf die Abmessungen der Luftführungskanäle bzw.- rohre abgestimmt. Bei einer Variante der Erfindung wird eine Steckverbindung zwischen den Anschlüssen des Gehäuses und den Kanälen und/oder Rohren eingesetzt. Vorzugsweise ist das Gehäuse hermetisch geschlossen.

Als vorteilhaft erweist es sich, wenn die Heizvorrichtung beabstandet vom Gebläse, insbesondere zwischen Blattwurzel und Blattspitze, im Rotorblatt angeordnet ist. Dabei hat es sich als besonders vorteilhaft erwiesen, die Heizvorrichtung im Schwerpunkt des Rotorblattes anzuordnen. Da das Rotorblatt nach außen immer dünner wird, liegt der Gewichtsschwerpunkt meist nicht in der geometrischen Mitte, sondern zur Blattwurzel hin verschoben. Diese Anordnung im Schwerpunkt des Rotorblatts bringt erhebliche Vorteile mit sich. So können auch leistungsstarke und damit verhältnismäßig schwere Heizvorrichtungen eingesetzt werden, ohne dass der Wirkungsgrad oder die Stabilität des Rotorblattes negativ beeinflusst werden.

Das erfindungsgemäße Verfahren zum Enteisen eines Rotorblatts einer Windenergieanlage weist folgende Schritte auf:
- Erzeugung eines Luftstroms im Rotorblatt,
- Erwärmung der Luftströmung mittels einer Heizvorrichtung.

Erfindungsgemäß weist diese Heizvorrichtung Module auf, die getrennt zuschaltbar und/oder abschaltbar sind.

Bei einer besonders günstigen Variante des Verfahrens wird die Luft während einer ersten Phase mit einer hohen Leistung erwärmt. Während einer zweiten Phase wird die Erwärmung abgesenkt. Dies geschieht vorzugsweise stufenartig. Dabei erweist es sich als besonders günstig, wenn die Absenkung der Erwärmung durch Abschaltung einzelner Heizmodule erfolgt. Vorzugsweise kommt dabei eine Einrichtung zur Steuer- und/oder Regelung zum Einsatz, die dazu eingerichtet ist, alternierend unterschiedliche Heizmodule abzuschalten, so dass nicht immer die gleichen Heizmodule abgeschaltet werden. So wird eine gleichmäßige Auslastung der Heizmodule erreicht und deren Lebenszeit verlängert.

Alternativ zu einem Ab- bzw. Zuschalten von Heizmodulen kann die Einrichtung zur Steuer- und/oder Regelung auch die Leistung der einzelnen Module senken bzw. erhöhen. Dies geschieht vorzugsweise mittels Leistungssteller, die kontinuierlich die elektrische Leistung regeln.

Die Luftströmung läuft zumindest teilweise in einem geschlossenen Luftleitsystem, das in den Hohlräumen des Rotorblattes angeordnet ist. Bei einer Variante der Erfindung weist das Luftleitsystem zumindest bereichsweise Öffnungen auf.

Die Luftführung kann auf unterschiedliche Weisen erfolgen.

Bei einer Variante der Erfindung ist die Heizvorrichtung in einem Bereich angeordnet, der unmittelbar benachbart zur Blattnase ist und nahezu parallel zur Blattnase verläuft. Dieser Bereich wird im Folgenden als Vorderbereich bezeichnet, da dieser unmittelbar benachbart zur Vorderkante des Rotorblatts verläuft.

Dabei wird die Luft von einem Gebläse zu der Heizvorrichtung gefördert, wobei es sich als besonders günstig erweist, wenn zwischen Gebläse und der Heizvorrichtung die Luft in einem geschlossenen Kanal und/oder. Rohr geführt wird.

Nach der Heizvorrichtung ist dann ein weiterer Kanalabschnitt und/oder Rohrabschnitt an die Heizvorrichtung angeschlossen, durch den die erwärmte Luft in Richtung der Blattspitze ausströmt. Vorzugsweise wird dieser Abschnitt nicht bis zur Blattspitze geführt sondern gibt der erwärmten Luft nur die gewünschte Richtung. Dabei kann es sich um ein Strahlrohr handeln. Die Rückführung der Luft erfolgt bei dieser Variante vorzugsweise in einem mittleren Bereich, der zwischen der Blattnase und der Rotorblatthinterkante angeordnet ist und nahezu parallel zur Blattnase bzw. Rotorblatthinterkante verläuft. Vorzugweise handelt es sich dabei um einen Mittelkanal. Bei einer Variante der Erfindung wird die Rückströmung in diesem mittleren Bereich nur von Stegen des Rotorblatts begrenzt, so dass keine geschlossenen Kanäle und/oder Rohre in diesem Bereich angeordnet sind.

Bei einer alternativen Ausführung der Erfindung ist die Heizvorrichtung in einem mittleren Bereich des Rotorblatts, der zwischen der Blattnase und der Rotorblatthinterkante angeordnet und nahezu parallel zur Blattnase bzw. Rotorblatthinterkante verläuft. Die Luft wird von dem Gebläse zu der Heizvorrichtung in einem geschlossenen Kanal und/oder Rohr gefördert. Von der Heizvorrichtung zur Blattspitze hin erweist es sich ebenfalls als günstig, wenn ein Kanal- oder Rohrabschnitt an der Heizvorrichtung angeordnet ist, durch den die Luft zur Blattspitze hin ausströmt. Dabei handelt es sich vorzugsweise um ein Strahlrohr.

Bei einer besonders günstigen Ausführung der Erfindung kommt mindestens ein Reservegebläse zum Einsatz, das bei einem Ausfall des Hauptgebläses einspringt und die Wärme der Heizvorrichtung abführt. Insbesondere bei den Rotorblättern mit Rohrheizkörpern ist dies von zentraler Bedeutung. Die Rohrheizkörper sorgen erfindungsgemäß für ein schnelles und zuverlässiges Enteisen.

Da Rohrheizkörper, aufgrund ihrer hohen Wärmekapazität, auch nach einer Abschaltung noch eine große Restmenge gespeichert haben, wird mindestens ein Hilfsgebläse vorgesehen, das bei Ausfall des Hauptgebläses eingeschaltet wird. Wäre dieses Reservegebläse nicht vorhanden, könnte es nicht ausreichen, die Rohrheizkörper bei Ausfall des Hauptgebläses einfach abzuschalten. Das Notgebläse dient als Sicherung vor einer Überhitzung. Bevorzugt hat das Notgebläse eine geringere Leistung als das Hauptgebläse.

Vorzugsweise sind im Rotorblatt Temperatursensoren angeordnet, die mit einer Einrichtung zur Steuer- und/oder Regelung in Verbindung stehen. Die Einrichtung kann bei Überschreitung vorgegebener Temperaturgrenzwerte Heizmodule abschalten bzw. ein Reservegebläse zuschalten und/oder die Förderleistung des Hauptgebläses erhöhen.

Bei einer besonders günstigen Ausführung der Erfindung weist das Gehäuse, welches die Heizvorrichtung umgibt, eine Isolierung auf. Die Isolierung schützt das Rotorblatt im Bereich des Heizmodules vor einer Überhitzung und verhindert die unerwünschte Wärmeabgabe in diesem Bereich. Dies ist insbesondere auch beim Ausfall eines Gebläses von Vorteil, da bei den erfindungsgemäßen Rotorblättern mit Rohrheizkörpern eine hohe Restwärme gespeichert ist.

Die erfindungsgemäßen Rotorblätter haben den Vorteil, dass die Heizvorrichtungen auf einfache Weise nachrüstbar bzw. austauschbar sind, ohne dass größere bauliche Maßnahmen ergriffen werden müssen. Bevorzugt ist unter diesem Aspekt die Variante, bei der die erwärmte Luft im Vorderbereich ohne Kanal- oder Rohrabschnitt bis zur Blattspitze geführt ist, da dies einen nachträglichen Einbau erleichtert.

Weitere Vorteile und Merkmale der Erfindung ergeben sich aus der Beschreibung eines Ausführungsbeispiels anhand von Zeichnungen und aus den Zeichnungen selbst. Dabei zeigt:
- Figur 1: einen schematischen Längsschnitt eines Rotorblatts,
- Figur 2: einen schematischen Längsschnitt einer Heizvorrichtung,
- Figur 3: einen schematischen Längsschnitt eines Heizelements,
- Figur 4: eine perspektivische Darstellung einer Heizvorrichtung.

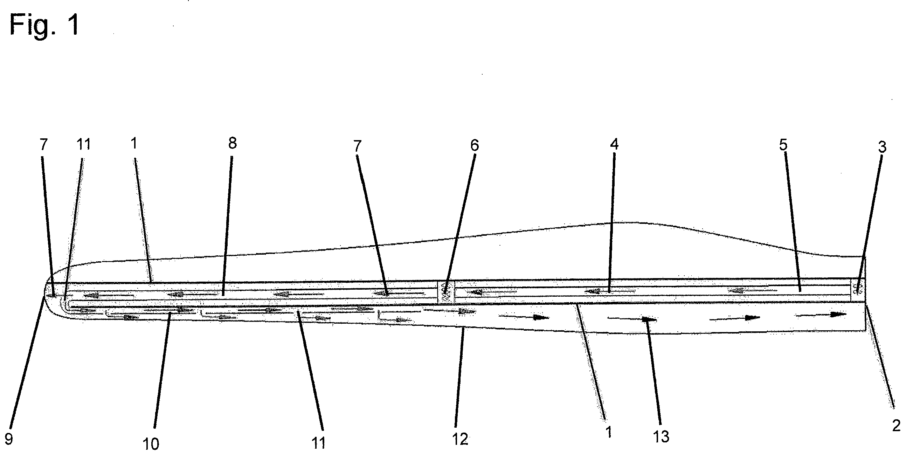

Figur 1 zeigt ein Rotorblatt einer Windenergieanlage. Im Ausführungsbeispiel handelt es sich um ein Rotorblatt aus glasfaserverstärktem Kunststoff, das in einer Halbschalen-Sandwich-Bauweise hergestellt wird.

Die Windenergieanlage umfasst einen Turm mit einer Gondel. In der Gondel sind der Generator und vorzugsweise ein Getriebe angeordnet. Die Gondel ist drehbar auf dem Turm gelagert. Der Rotor der Windenergieanlage umfasst eine Nabe und die Rotorblätter.

Die Länge der Rotorblätter liegt vorzugsweise zwischen 30 und 65 m.

Im Innern des Rotorblatts verlaufen Stege 1. Die Stege 1 unterteilen den Innenraum des Rotorblatts.

In der Blattwurzel 2 des Rotorblatts ist ein Gebläse 3 angeordnet. Das Gebläse 3 fördert einen kalten Luftstrom 4. In den Hohlräumen des Rotorblatts ist ein Luftleitsystem angeordnet. Der erste Abschnitt 5 erstreckt sich vom Gebläse 3 bis zur einer Heizvorrichtung 6. Der erste Abschnitt 5 des Luftleitsystems besteht aus einem geschlossenen Kanal. Alternativ kann auch ein geschlossenes Rohr für die Führung des kalten Luftstroms 4 zur Heizvorrichtung 6 eingesetzt werden. Im Ausführungsbeispiel ist der erste Abschnitt 5 des Luftleitsystems aus einem Kunststoff gefertigt.

Die Heizvorrichtung 6 ist räumlich beabstandet vom Gebläse 3 angeordnet. Gebläse 3 und Heizvorrichtung 6 sind mit einem geschlossenen Kanal verbunden. Im Ausführungsbeispiel wird eine besonders günstige Variante der Erfindung gezeigt, bei der die Heizvorrichtung 6 im Schwerpunkt des Rotorblatts angeordnet ist.

Die Heizvorrichtung 6 erwärmt die Luftströmung und der warme Luftstrom 7 wird in einem zweiten Abschnitt des Luftleitsystems 8 zur Blattspitze 9 geführt. Bei dem zweiten Abschnitt 8 des Luftleitsystems handelt es sich im Ausführungsbeispiel ebenfalls um einen luftdicht geschlossenen Kunststoffkanal. Dieser zweite Abschnitt 8 des Luftleitsystems ist zudem im Ausführungsbeispiel nach außen isoliert oder besteht aus schlecht leitendem Kunststoff, so dass geringe Wärmeverluste auftreten.

Der warme Luftstrom 7 tritt durch mindestens eine Öffnung 11 und trifft auf die Innenwand der Blattspitze 9 und erwärmt diese. Dadurch wird eine Eisbildung an der Blattspitze verhindert bzw. beseitigt.

In einem dritten Abschnitt 10 des Luftleitsystems wird die Luftströmung zurück in Richtung Blattwurzel 2 geführt. Bei dem dritten Abschnitt 10 des Luftleitsystems handelt es sich um einen Kanal, der weitere Öffnungen 11 aufweist. Durch die Öffnungen 11 strömt warme Luft an die Innenwände der Blattnase 12. Da das Rotorblatt von der Nasenkante her umströmt wird, setzt die Vereisung eines Rotorblatts vorzugsweise an der Blattnase 12 an. Diese Eisbildung wird durch den warmen Luftstrom verhindert, der an die Innenwand im Bereich der Blattnasenkante geleitet wird.

Der vierte Abschnitt 13 wird von einem Hohlraum des Rotorblatts gebildet, der von Stegen 1 und den Innenwänden begrenzt wird. In diesem vierten Bereich 13 des Luftleitsystems ist kein Kanal angeordnet. Die Luft strömt zurück zur Blattwurzel 2.

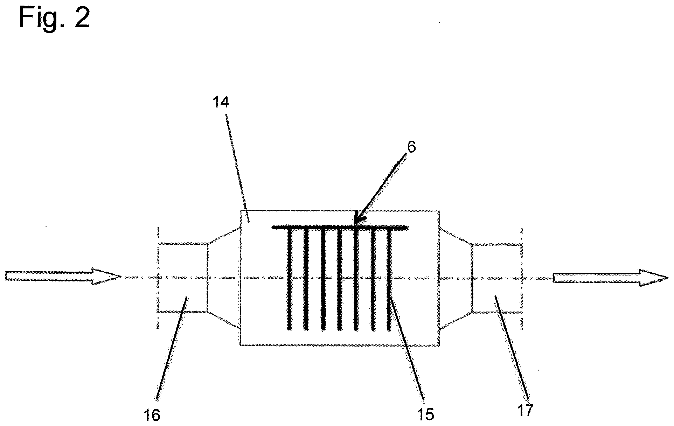

Figur 2 zeigt einen schematischen Querschnitt der Heizvorrichtung 6, die von einem Gehäuse 14 umgeben ist. Die Heizvorrichtung 6 umfasst im Ausführungsbeispiel mehrere Heizmodule 15. In der Zeichnung sind exemplarisch sieben Heizmodule 15 dargestellt. Die Heizmodule 15 sind in Gruppen zuschaltbar und/oder abschaltbar. Dadurch kann flexibel auf unterschiedliche Witterungsbedingungen reagiert werden. Im Ausführungsbeispiel umfasst jedes Heizmodul 15 ein Heizelement. Alternativ kann ein Heizmodul 15 auch mehrere Heizelemente umfassen.

Die Heizvorrichtung 6 ist von einem hermetisch geschlossenen Gehäuse 14 umgeben, das einen Kaltluftanschluss 16 und einen Warmluftanschluss 17 aufweist. Im Ausführungsbeispiel wird sowohl der Kaltluftanschluss 16 als auch der Warmluftanschluss 17 an einen Kanal angeschlossen.

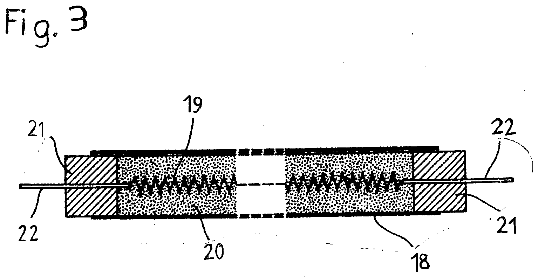

Figur 3 zeigt einen schematischen Längsschnitt eines Heizelements. Das erfindungsgemäße Rotorblatt umfasst im Ausführungsbeispiel Heizelemente die ein metallisches Mantelrohr 18 aufweisen. In der Mitte des Mantelrohrs 18 ist ein Widerstandsheizelement 19 angeordnet. Der freie Raum des Mantelrohrs 18 wird von einer Einbettmasse 20 ausgefüllt. Das Mantelrohr 18 ist an seinen Enden durch stopfenförmige Abschlussteile 21 geschlossen, die gegen Verschiebung gesichert sind. Durch die Abschlussteile 21 sind stiftförmige Anschlusselemente 22 hindurchgeführt, die mit dem Widerstandsheizelement 19 verbunden sind und dessen Anschluss an eine elektrische Stromquelle ermöglichen. Im Ausführungsbeispiel wird eine Einbettmasse 20 eingesetzt, die Magnesiumoxid (MgO) umfasst.

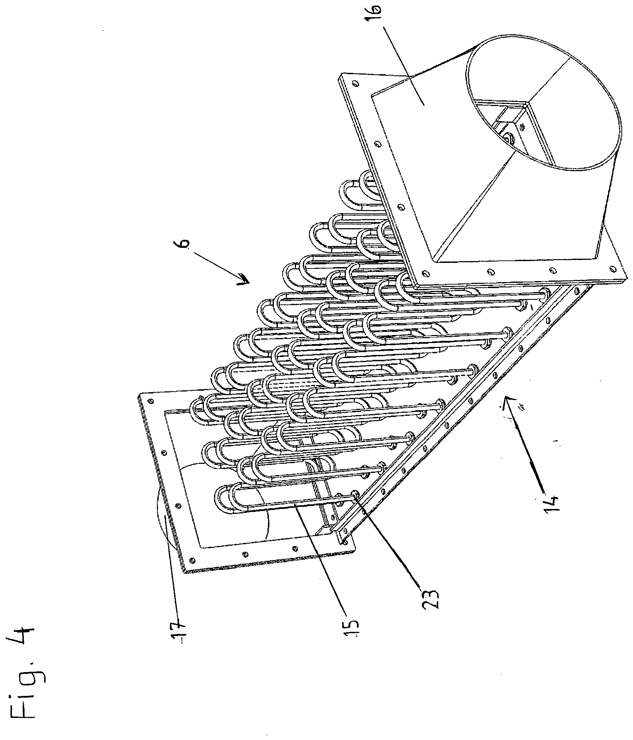

Fig. 4 zeigt eine perspektivische Darstellung einer Heizvorrichtung 6, die von einem Gehäuse 14 umgeben ist Die Heizvorrichtung 6 umfasst im Ausführungsbeispiel mehrere Heizmodule 15, die einzeln oder in Gruppen zuschaltbar und/oder abschaltbar sind. Die Heizmodule 15 sind als Rohrheizkörper ausgeführt, die im Ausführungsbeispiel in Durchströmungsrichtung versetzt zueinander angeordnet sind. Die Heizmodule 15 sind an einer Wand angeordnet und ragen in einen Raum hinein, der von dem Gehäuse 14 umschlossen wird. Die Wand wird von dem Gehäuse 14 gebildet. In der Zeichnung sind drei Seitenwände des Gehäuses 14 nicht dargestellt, damit ein Blick in das Innere der Heizvorrichtung 6 gewährt wird.

In Durchströmungsrichtung sind in mehreren Reihen Rohrheizkörper hintereinander angeordnet. Vorzugsweise sind diese in Durchströmungsrichtung versetzt zueinander angeordnet. Die als Rohrheizkörper ausgeführten Heizmodule 15 weisen mehrere Windungen auf. Im Ausführungsbeispiel ist in jeder Reihe ein Rohrheizkörper angeordnet, der sich wellenartig schlängelt. Durch die Wellenform der Rohrheizkörper werden Schlaufen gebildet, die in den Raum hineinragen. Jedes Heizmodul 15 weist an zwei einander gegenüberliegenden Längsseiten einer Wand des Gehäuses 14 Befestigungsstellen 23 auf. Die einzelnen Heizmodule 15 sind über die Befestigungsstellen 23 an einer Fläche fixiert, die von einer Seitenwand des Gehäuses 14 gebildet wird. Im Ausführungsbeispiel sind alle Heizmodule 15 an der gleichen Fläche der Heizvorrichtung 6 befestigt. Hinter dieser Fläche, außerhalb des Strömungsraums, sind die elektrischen Anschlüsse für die Heizmodule 15 angeordnet.

Die Heizvorrichtung 6 ist von einem hermetisch geschlossenen Gehäuse 14 umgeben, das kastenförmig als Quader mit 4 Seitenwänden ausgeführt ist und an einer Stirnseite einen Kaltluftanschluss 16 und an einer anderen Stirnseite einen Warmluftanschluss 17 aufweist.

Im Ausführungsbeispiel weist sowohl der Kaltluftanschluss 16 als auch der Warmluftanschluss 17 eine Form auf, die sich zu den Anschlussrohren bzw. - kanälen hin verjüngt. Die Heizvorrichtung 6 ist gegenüber den Verbindungsrohren bzw. -kanälen in ihren radialen Abmessungen größer.

## Patentansprüche

1. Rotorblatt für eine Windenergieanlage mit mindestens einem Gebläse (3) zur Erzeugung einer Luftströmung im Rotorblatt und mindestens einer Heizvorrichtung (6) zur Erwärmung zumindest eines Teils der Luftströmung,
**dadurch gekennzeichnet, dass**
die Heizvorrichtung (6) mindestens ein Heizmodul (15) aufweist,
wobei das Heizmodul (15) mindestens ein Heizelement umfasst und
das Heizelement mindestens einen Widerstandsheizleiter (19) aufweist, der von einem Mantel (18) umgeben ist,
wobei eine Einbettmasse (20) den freien Raum im Innern des Mantels (18) zumindest teilweise ausfüllt
und die Heizvorrichtung (6) in einem Gehäuse (14) angeordnet ist, das einen Kaltluftanschluss (16) und/oder einen Warmluftanschluss (17) aufweist.

2. Rotorblatt nach Anspruch 1, **dadurch gekennzeichnet, dass** mindestens zwei Heizmodule (15) der Heizvorrichtung (6) mit einer Schalteinrichtung verbunden sind, zum einzel und/oder gruppenweisen Zu- und/oder Abschalten der Heizmodule (15).

3. Rotorblatt nach Anspruch 1 oder 2, **dadurch gekennzeichnet, dass** im Rotorblatt ein Luftleitsystem angeordnet ist zur zumindest teilweisen Führung der Luftströmung.

4. Rotorblatt nach Anspruch 3, **dadurch gekennzeichnet, dass** zumindest ein Abschnitt (5) des Luftleitsystems von einem geschlossenen Kanal und/oder geschlossenen Rohr gebildet wird.

5. Rotorblatt nach Anspruch 4, **dadurch gekennzeichnet, dass** zumindest ein Abschnitt (10) des Luftleitsystems Öffnungen (11) aufweist.

6. Rotorblatt nach Anspruch 1, **dadurch gekennzeichnet, dass** am Kaltluftanschluss (16) und/oder am Warmluftanschluss (17) ein Kanal und/oder Rohr angeschlossen ist.

7. Rotorblatt nach einem der Ansprüche 1 bis 6, **dadurch gekennzeichnet, dass** die Heizvorrichtung (6) beabstandet vom Gebläse (3) im Rotorblatt angeordnet ist.

8. Rotorblatt nach einem der Ansprüche 1 bis 7, **dadurch gekennzeichnet, dass** die Heizvorrichtung (6) im Bereich des Schwerpunkts des Rotorblatts angeordnet ist.

9. Verfahren zum Enteisen eines Rotorblatts nach einem der Ansprüche 1 bis 8 mit folgenden Schritten:
- Erzeugung einer Luftströmung im Rotorblatt,
- Erwärmung zumindest eines Teils der Luftströmung mit Hilfe einer Heizvorrichtung (6),
- wobei die Heizvorrichtung (6) Heizmodule (15) umfasst, die einzeln und/oder gruppenweise zugeschaltet und/oder abgeschaltet werden.

## Claims

1. Rotor blade for a wind power installation, having at least one blower (3) for generating an air flow in the rotor blade, and having at least one heating apparatus (6) for heating at least a part of the air flow,
**characterized in that**
the heating apparatus (6) has at least one heating module (15),
wherein the heating module (15) comprises at least one heating element, and the heating element has at least one resistance heating conductor (19) which is surrounded by a jacket (18),
wherein an embedding compound (20) at least partially fills the free space in the interior of the jacket (18),
and the heating apparatus (6) is arranged in a housing (14) which has a cold-air connector (16) and/or a warm-air connector (17).

2. Rotor blade according to Claim 1, **characterized in that** at least two heating modules (15) of the heating apparatus (6) are connected to a switching device for the purpose of individual and/or group-wise activation and/or deactivation of the heating modules (15).

3. Robot blade according to Claim 1 or 2, **characterized in that** an air-guiding system is arranged in the rotor blade for the purpose of at least partially conducting the air flow.

4. Rotor blade according to Claim 3, **characterized in that** at least one section (5) of the air-guiding system is formed by a closed channel and/or closed tube.

5. Rotor blade according to Claim 4, **characterized in that** at least one section (10) of the air-guiding system has openings (11).

6. Rotor blade according to Claim 1, **characterized in that** a channel and/or tube is connected to the cold-air connector (16) and/or to the warm-air connector (17) .

7. Rotor blade according to one of Claims 1 to 6, **characterized in that** the heating apparatus (6) is arranged in the rotor blade so as to be spaced apart from the blower (3).

8. Rotor blade according to one of Claims 1 to 7, **characterized in that** the heating apparatus (6) is arranged in the region of the centre of gravity of the rotor blade.

9. Method for de-icing a rotor blade according to one of Claims 1 to 8, having the following steps:
- generating an air flow in the rotor blade,
- heating at least a part of the air flow with the aid of a heating apparatus (6),
- wherein the heating apparatus (6) comprises heating modules (15) which are activated and/or deactivated individually and/or in a group-wise manner.

## Revendications

1. Pale de rotor pour une éolienne avec au moins une soufflante (3) pour produire un écoulement d'air dans la pale de rotor et au moins un dispositif de chauffage (6) pour chauffer au moins une partie de l'écoulement d'air, **caractérisée en ce que** le dispositif de chauffage (6) présente au moins un module de chauffage (15),
dans laquelle le module de chauffage (15) comprend au moins un élément de chauffage et l'élément de chauffage présente au moins un conducteur de chauffage par résistance, qui est entouré d'une gaine (18),
dans laquelle une masse d'enrobage (20) occupe au moins en partie l'espace libre à l'intérieur de la gaine (18), et le dispositif de chauffage (6) est disposé dans un boîtier (14), qui présente un raccord d'air froid (16) et/ou un raccord d'air chaud (17).

2. Pale de rotor selon la revendication 1, **caractérisée en ce qu'**au moins deux modules de chauffage (15) du dispositif de chauffage (6) sont raccordés à un dispositif de commutation, pour la connexion et/ou la déconnexion individuellement ou par groupes des modules de chauffage (15).

3. Pale de rotor selon la revendication 1 ou 2, **caractérisée en ce qu'**un système de guidage d'air est disposé dans la pale de rotor pour le guidage au moins partiel de l'écoulement d'air.

4. Pale de rotor selon la revendication 3, **caractérisée en ce qu'**au moins une partie (5) du système de guidage d'air est formée par un canal fermé et/ou un tube fermé.

5. Pale de rotor selon la revendication 4, **caractérisée en ce qu'**au moins une partie (10) du système de guidage d'air présente des ouvertures (11).

6. Pale de rotor selon la revendication 1, **caractérisée en ce qu'**un canal et/ou un tube est raccordé au raccord d'air froid (16) et/ou au raccord d'air chaud (17).

7. Pale de rotor selon l'une quelconque des revendications 1 à 6, **caractérisée en ce que** le dispositif de chauffage (6) est disposé à distance de la soufflante (3) dans la pale de rotor.

8. Pale de rotor selon l'une quelconque des revendications 1 à 7, **caractérisée en ce que** le dispositif de chauffage (6) est disposé dans la région du centre de gravité de la pale de rotor.

9. Procédé pour dégivrer une pale de rotor selon l'une quelconque des revendications 1 à 8, comprenant les étapes suivantes:
- produire un écoulement d'air dans la pale de rotor,
- chauffer au moins une partie de l'écoulement d'air à l'aide d'un dispositif de chauffage (6),
- dans lequel le dispositif de chauffage (6) comprend des modules de chauffage (15), qui sont connectés et/ou déconnectés individuellement ou par groupes.
